# EUROPEAN PATENT APPLICATION

(11) **EP 4 834 496 A1**
(43) Date of publication of application: **04.11.2026**
(21) Application number: 26175829.6
(22) Date of filing: 30.04.2026
(51) Int. Cl.: B07C 5/36, B25J 5/00, B25J 9/16, G05B 19/418

(54) **RETRIEVAL ROBOT, SYSTEM AND METHOD FOR HANDLING FALLEN PARCELS IN AUTOMATED SORTING ENVIRONMENTS**

(30) Priority: 03.05.2025 IN 202511043057
(71) Applicant: Addverb Technologies Limited, Uttar Pradesh 201310 (IN)
(72) Inventor: Nandi, Suvayan, 201310 Noida Uttar Pradesh (IN); Gopalakrishnan, Bharath, 201310 Noida Uttar Pradesh (IN); Kumar, Rajesh, 201310 Noida Uttar Pradesh (IN); Tiwari, Manisha, 201310 Noida Uttar Pradesh (IN); Goel, Divyanshu, 201310 Noida Uttar Pradesh (IN)
(74) Representative: Dr. Solf & Zapf Patent- und Rechtsanwalts PartG mbB

(57) **Abstract**

A system and a method for handling fallen parcels in an automated sorting environment are described. The system includes a detection module configured to detect a fallen parcel and determine location coordinates of the fallen parcel in a sorting area, a traffic management module creates a restricted zone around the fallen parcel and reroutes automated robots operating in the sorting area to avoid the restricted zone. A retrieval robot is implemented, which comprises a mobile platform, a robotic arm mounted on the mobile platform, and a control unit. The control unit navigates the mobile platform to the location coordinates of the fallen parcel, operates the robotic arm to retrieve the fallen parcel, navigates the mobile platform to transport the retrieved fallen parcel to a designated station, and operates the robotic arm to deposit the fallen parcel at the designated station.

## Description

### FIELD OF THE PRESENT DISCLOSURE

The present disclosure relates to the field of automated material handling systems, and more particularly to systems and methods for handling fallen parcels in automated sorting environments.

### BACKGROUND

In modern logistics and e-commerce operations, automated sorting systems are widely deployed for efficiently processing large volumes of parcels. These automated sorting systems typically comprise fleets of automated robots that transport parcels across sorting facilities according to predetermined routes and destinations. The automated robots navigate along designated paths within the sorting area, carrying parcels from intake points to appropriate destination zones based on sorting criteria such as shipping destination, package type, or priority level.

Despite the high level of automation and precision in these systems, operational disruptions can occur when parcels accidentally fall from the automated robots during transport. Such fallen parcels create obstacles in the sorting area that can impede the movement of other automated robots, potentially leading to collisions, traffic congestion, and significant operational delays. The presence of fallen parcels on the floor of sorting facilities represents a challenging issue that can substantially reduce the efficiency and throughput of automated sorting systems.

Traditional approaches to handling fallen parcels in automated sorting environments have primarily relied on human intervention. When a parcel is detected on the floor, an alert is typically triggered, requiring a human operator to physically enter the sorting area, locate the fallen parcel, retrieve it manually, and either place it back on an automated robot or remove it for inspection. This manual intervention process necessitates temporarily halting or redirecting automated robot operations in the affected area, resulting in operational downtime and reduced sorting capacity. The requirement for human entry into active sorting areas also raises safety concerns and requires additional safety protocols to prevent accidents involving humans and operating automated robots.

Some existing systems have attempted to address this challenge by implementing vision systems that can detect fallen parcels and generate alerts. However, these systems merely identify the problem without providing an automated solution for retrieving the fallen parcels. The detection capabilities, while valuable, still necessitate human intervention for the actual retrieval process, failing to fully close the automation loop. Furthermore, existing detection systems may lack precision in determining exact coordinates of fallen parcels, making the subsequent manual retrieval process more time-consuming and less efficient.

Attempts to enhance automation in sorting facilities have explored various robotic systems, including stationary robotic arms for picking and placing parcels at fixed locations and autonomous mobile robots for transport tasks. However, these systems are typically designed for standard operations rather than exceptional situations like fallen parcel retrieval. Stationary robotic arms lack the mobility needed to reach fallen parcels at arbitrary locations within the sorting area, while standard transport robots generally lack the manipulation capabilities required to pick up parcels from the floor. The specialized integration of mobility and manipulation capabilities needed for fallen parcel retrieval represents a gap in current automated sorting system technologies.

Accordingly, there exists a need for automated systems and methods capable of not only detecting fallen parcels but also autonomously retrieving them without human intervention. Such a solution may help to maintain the continuous operation of the sorting facility while efficiently addressing the fallen parcel issue. Consequently, minimizing operational disruptions, reducing downtime, and enhancing overall sorting system efficiency. Furthermore, it may be desired that such solution integrates with existing automated sorting infrastructure and traffic management systems to ensure coordinated operation and prevent additional complications during the retrieval process.

### SUMMARY

In an aspect, a system for handling fallen parcels in an automated sorting environment comprises a detection module configured to detect a fallen parcel and determine location coordinates of the fallen parcel in a sorting area. The system also includes a traffic management module configured to create a restricted zone around the fallen parcel, and reroute automated robots operating in the sorting area to avoid the restricted zone. Additionally, the system includes a retrieval robot comprising a mobile platform, a robotic arm mounted on the mobile platform, and a control unit configured to navigate the mobile platform to the location coordinates of the fallen parcel, operate the robotic arm to retrieve the fallen parcel, navigate the mobile platform to transport the retrieved fallen parcel to a designated station, and operate the robotic arm to deposit the fallen parcel at the designated station.

In some embodiments, the detection module comprises a vision system mounted above the sorting area and including one or more cameras configured to capture images of the sorting area, wherein the vision system is configured to identify and locate the parcel(s) on the floor of the sorting area.

In some embodiments, the traffic management module is further configured to assign routing priority to the retrieval robot and transmit stop or divert commands to other automated robots that are in a path of the retrieval robot.

In some embodiments, the robotic arm comprises an end effector configured to hold parcels.

In some embodiments, the control unit is further configured to calculate weight of the fallen parcel based on deformation of the robotic arm during lifting thereof, and adjust motor parameters of the robotic arm based on the calculated weight.

In some embodiments, the designated station includes a scanning device configured to capture images of the deposited fallen parcel for inspection, to detect physical damage to the parcel.

In some embodiments, the designated station further includes a transportation device configured to return the fallen parcel to the automated sorting environment after inspection, based on results of the scanning.

In another aspect, a retrieval robot for handling fallen parcels in an automated sorting environment comprises a mobile platform configured to navigate within a sorting area, a robotic arm mounted on the mobile platform, and a control unit configured to receive location coordinates of a fallen parcel detected in the sorting area, navigate the mobile platform to the location coordinates of the fallen parcel, operate the robotic arm to retrieve the fallen parcel, navigate the mobile platform to a designated station, and operate the robotic arm to deposit the fallen parcel at the designated station.

In some embodiments, the robotic arm comprises an end effector configured to hold parcels, and wherein the end effector.

In some embodiments, the control unit is further configured to calculate weight of the fallen parcel based on deformation of the robotic arm during lifting thereof, and adjust motor parameters of the robotic arm based on the calculated weight.

In yet another aspect, a method for handling fallen parcels in an automated sorting environment comprises detecting, via a detection module, a fallen parcel in a sorting area. The method includes determining location coordinates of the fallen parcel, creating a restricted zone around the fallen parcel, and rerouting automated robots operating in the sorting area to avoid the restricted zone. The method also includes navigating a retrieval robot to the location coordinates of the fallen parcel, wherein the retrieval robot comprises a mobile platform and a robotic arm mounted on the mobile platform, operating the robotic arm to retrieve the fallen parcel, navigating the retrieval robot to transport the retrieved fallen parcel to a designated station, and operating the robotic arm to deposit the fallen parcel at the designated station.

In some embodiments, detecting the fallen parcel comprises processing image data from one or more cameras positioned above and/or around the sorting area to identify and locate parcel(s) on the floor of the sorting area.

In some embodiments, navigating the retrieval robot to the location coordinates comprises assigning routing priority to the retrieval robot, and transmitting stop or divert commands to other automated robots that are in a path of the retrieval robot.

In some embodiments, the method further comprises scanning the deposited fallen parcel at the designated station for inspection to detect physical damage, and return the fallen parcel from the designated station to the automated sorting environment after inspection, based on results of the scanning.

The foregoing summary is illustrative only and is not intended to be in any way limiting. In addition to the illustrative aspects, embodiments, and features described earlier, further aspects, embodiments, and features will become apparent by reference to the drawings and the following detailed description.

### BRIEF DESCRIPTION OF THE FIGURES

For a more complete understanding of example embodiments of the present disclosure, reference is now made to the following descriptions taken in connection with the accompanying drawings in which:
FIG. 1 is a schematic diagram illustrating a system for handling fallen parcels in an automated sorting environment, according to embodiments of the present disclosure.
FIG. 2 is a diagrammatic perspective view of a retrieval robot used in the system of FIG. 1, according to embodiments of the present disclosure.
FIG. 3 is a flowchart of a method for handling fallen parcels in an automated sorting environment, according to embodiments of the present disclosure.
FIG. 4A is an exemplary schematic top view of an automated sorting environment illustrating detection of a fallen parcel and creation of a restricted zone, according to embodiments of the present disclosure.
FIG. 4B is an exemplary schematic top view of the automated sorting environment of FIG. 4A illustrating navigation of the retrieval robot to the fallen parcel and retrieval operation, according to embodiments of the present disclosure.
FIG. 4C is an exemplary schematic top view of the automated sorting environment of FIG. 4A illustrating transport of the retrieved fallen parcel to a designated station, according to embodiments of the present disclosure.

### DETAILED DESCRIPTION

In the following description, for purposes of explanation, numerous specific details are set forth in order to provide a thorough understanding of the present disclosure. It will be apparent, however, to one skilled in the art that the present disclosure is not limited to these specific details.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

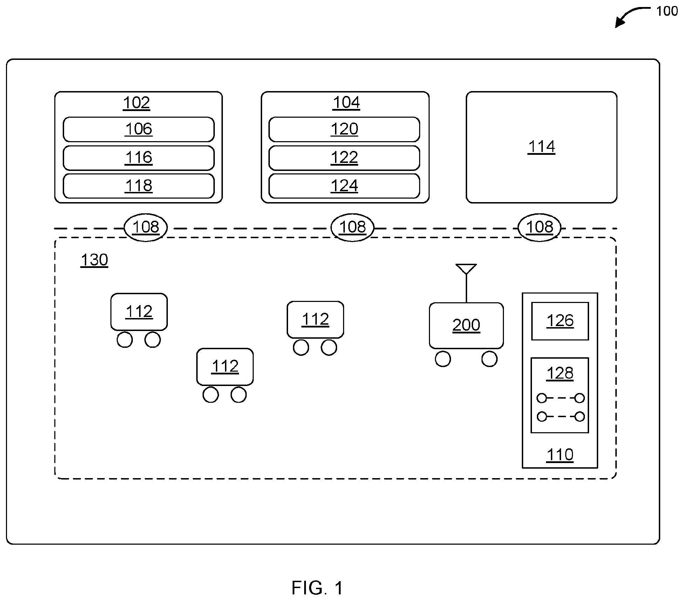

Referring to FIG. 1, illustrated is a schematic diagram of a system 100 for handling fallen parcels in an automated sorting environment, according to certain embodiments. The system 100 provides an automated solution for detecting, retrieving, and processing fallen parcels in environments where automated robots are used for parcel sorting operations. The system 100 implements non-disruptive and non-intrusive methodology for handling fallen parcels without requiring manual intervention, thereby maintaining continuous operation of the sorting environment. The system 100 of the present disclosure employs coordinated sensors, controllers, and mechanical components to identify fallen parcels on the floor, isolate the affected area, retrieve the fallen items, and return them to the normal processing flow. Through this approach, the system 100 minimizes operational downtime and prevents potential collisions between standard automated robots and obstacles created by fallen parcels. The system 100 operates continuously during regular sorting operations, actively monitoring for exceptions and responding when necessary to maintain efficient throughput of parcels through the sorting environment.

As illustrated, the system 100 includes a detection module 102, a traffic management module 104, a designated station 110, a central control system 114, and a retrieval robot 200 operating within a sorting area (as represented by reference numeral 130) of the automated sorting environment. These components work together to enable fallen parcel management. The detection module 102 continuously monitors the sorting area 130 to identify fallen parcels and determine their precise locations. The traffic management module 104 creates restricted zones around detected fallen parcels and coordinates movement of automated robots to maintain safe operations. The central control system 114 manages overall coordination between all components of the system 100, ensuring synchronized operation during both normal sorting activities and fallen parcel retrieval operations. The designated station 110 provides a dedicated location where retrieved fallen parcels are deposited for inspection and potential reinduction into the sorting process. The retrieval robot 200 is a key component of the system 100 and is configured to physically navigate to fallen parcels, retrieve them from the floor, and transport them to the designated station 110 for further processing.

In particular, the detection module 102 is configured to detect a fallen parcel and determine location coordinates of the fallen parcel in the sorting area 130. The detection module 102 includes a vision system 106 that captures visual data of the sorting area 130 and processes this data to identify objects on the floor that should not be there, such as fallen parcels. The vision system 106 includes one or more cameras 108 mounted above the sorting area 130, providing detailed coverage of the operational space. The cameras 108 are positioned strategically to eliminate blind spots and ensure complete monitoring of the sorting area 130. The detection module 102 further includes an image processing unit 116 that processes the visual data captured by the vision system 106. The image processing unit 116 employs computer vision algorithms to analyse the captured images and identify potential fallen parcels based on their shape, size, position, and context within the sorting area 130.

In some embodiments, the detection module 102 may also include parcel identification logic 118 that confirms whether a detected object is indeed a fallen parcel that requires retrieval. The parcel identification logic 118 applies various criteria to distinguish fallen parcels from other objects that might be present on the floor of the sorting area 130. Once a fallen parcel is identified, the detection module 102 determines its precise location coordinates within the sorting area 130. These coordinates are expressed in a reference frame that is understood by both the traffic management module 104 and the retrieval robot 200, enabling precise navigation to location of the fallen parcel.

Further, in the system 100, the traffic management module 104 is connected to the detection module 102 via a communication network, which facilitates the exchange of data between all components of the system 100. Upon receiving information about a detected fallen parcel from the detection module 102, the traffic management module 104 creates a restricted zone around the fallen parcel and manages the movement of automated robots operating in the sorting area 130 to avoid this restricted zone. For this purpose, the traffic management module 104 includes a zone restriction unit 120 that establishes a defined area around the fallen parcel where standard automated robots are not permitted to enter. This restricted zone prevents other robots from potentially colliding with the fallen parcel or interfering with the retrieval operation.

The traffic management module 104 further includes a routing control unit 122 that calculates alternative routes for standard automated robots 112 operating in the sorting area 130, to navigate around the restricted zone while maintaining efficient overall operation. The routing control unit 122 communicates with the standard automated robots 112 through the communication network, sending them updated routing instructions that avoid the restricted zone. Additionally, the traffic management module 104 includes a priority assignment unit 124 that assigns special routing priority to the retrieval robot 200. This priority designation ensures that the retrieval robot 200 can efficiently navigate to the fallen parcel without being impeded by other automated robots in the sorting area 130. The priority assignment unit 124 can issue stop or divert commands to standard automated robots 112 that might be in the path of the retrieval robot 200, ensuring clear passage for the retrieval operation.

The retrieval robot 200 is a specialized component of the system 100 for handling fallen parcels in the automated sorting environment, designed to autonomously navigate within the sorting area 130 and physically retrieve fallen parcels. The retrieval robot 200 receives location coordinates of detected fallen parcels from the detection module 102 through the communication network, and executes precise movements to reach these locations. Upon arrival at a fallen parcel location, the retrieval robot 200 performs retrieval operations and subsequently transports the retrieved parcels to the designated station 110 for inspection. For purposes of the present disclosure, the retrieval robot 200 may be implemented as any suitable automated robot, including automated guided vehicle (AGV) and automated mobile robot (AMR). The retrieval robot 200 operates with routing priority assigned by the traffic management module 104, enabling efficient movement through the sorting area 130 while other automated robots are rerouted to avoid collision. The retrieval robot 200 works in coordination with other components of the system 100 to minimize disruption to overall sorting operations while effectively addressing fallen parcel incidents without manual intervention.

In embodiment of the present disclosure, the designated station 110 is a specialized area within the sorting environment where retrieved fallen parcels are deposited for inspection and processing. The designated station 110 includes a scanning device 126 that captures images of deposited fallen parcels to assess their condition and detect any physical damage that might have occurred during the fall or subsequent retrieval. The designated station 110 also includes a transportation device 128 configured to return the fallen parcel to the automated sorting environment after inspection, based on results of the scanning. In a particular embodiment, the transportation device is a conveyor system 128 that is connected to the main automated sorting environment, enabling the return of inspected parcels to the normal sorting process if they are found to be undamaged and suitable for continued processing.

The central control system 114 oversees the operation of the entire system 100, coordinating the activities of the detection module 102, the traffic management module 104, the retrieval robot 200, and the designated station 110. The central control system 114 maintains overall situational awareness of the sorting area 130, managing the flow of information between system components and ensuring that fallen parcel retrieval operations are integrated with the standard sorting operations. The central control system 114 also maintains records of fallen parcel incidents, retrieval operations, and inspection results, providing data for system performance analysis and continuous improvement.

The various components of the system 100 communicate with each other through the communication network, which may be implemented using wired connections, wireless technologies, or a combination of both. The communication network provides reliable, low-latency data transmission between system components, enabling real-time coordination and response to fallen parcel incidents. The network protocols used in the communication network are selected to ensure secure, reliable communication that is resistant to interference and can prioritize time-sensitive messages related to system coordination and safety.

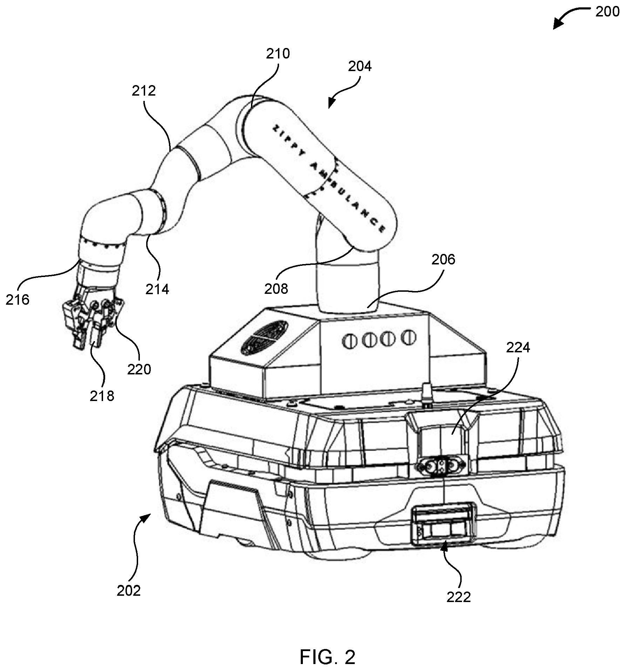

Referring to FIG. 2, illustrated is a diagrammatic view of the retrieval robot 200. The retrieval robot 200 is specially designed for the task of retrieving fallen parcels in automated sorting environments and depositing it at the designated station. The retrieval robot 200 includes several specialized components that enable it to perform this function effectively and safely. As illustrated, the retrieval robot 200 includes a mobile platform 202, a robotic arm 204 mounted on the mobile platform 202, and a control unit 222 (generally represented) that manages the operation of both the mobile platform 202 and the robotic arm 204. Herein, the mobile platform 202 is configured to provide mobility to the retrieval robot 200, enabling it to navigate throughout the sorting area 130 to reach fallen parcels at any location. The mobile platform 202 is equipped with navigation sensors and motors that allow precise movement and positioning within the sorting area 130. The robotic arm 204 is mounted on the mobile platform 202 and is designed to reach down to the floor to pick up fallen parcels. The robotic arm 204 comprises multiple joints that provide a wide range of motion, enabling the arm to reach parcels in various positions and orientations. The control unit 222 is the central processing system of the retrieval robot 200, coordinating all of its operations. The control unit 222 receives location coordinates of fallen parcels from the detection module 102 via the communication network, then plans and executes the navigation and retrieval operations. The control unit 222 manages the movement of the mobile platform 202 to the location of the fallen parcel, controls the operation of the robotic arm 204 to pick up the parcel, navigates the mobile platform 202 to transport the retrieved parcel to the designated station 110, and finally operates the robotic arm 204 to deposit the parcel at the designated station 110.

In particular, the mobile platform 202 forms the base of the retrieval robot 200 and provides mobility throughout the sorting area. The mobile platform 202 is constructed as a stable, low-profile structure that supports the weight of the robotic arm 204 and any lifted parcels while maintaining balance during operations. The mobile platform 202 includes drive wheels and steering mechanisms that enable for its navigation and positioning. The mobile platform 202 may also include a battery system 224 (generally represented) that provides power to all components of the retrieval robot 200. The battery system 224 is configured to supply sufficient power for extended operation periods, supporting multiple retrieval missions before requiring recharging. In some examples, the mobile platform 202 may further include safety features such as proximity sensors that detect obstacles and prevent collisions during navigation, without any limitations.

The robotic arm 204 is mounted on the upper surface of the mobile platform 202 and is the primary manipulation component of the retrieval robot 200. The robotic arm 204 is a multi-axis arm with a plurality of joints 206, 208, 210, 212, 214, and 216 that provide six degrees of freedom, enabling the arm to reach and manipulate parcels in various positions and orientations. The joints 206, 208, 210, 212, 214, and 216 are actuated by precision motors (as known in the art) that provide controlled movement with high positional accuracy. The robotic arm 204 further includes an end effector 218 configured to hold parcels. The end effector 218 is attached to the distal end of the robotic arm 204 and is the component that directly interacts with fallen parcels. The end effector 218 is designed to securely grasp parcels of various shapes, sizes, and materials without causing damage.

Specifically, herein, a base joint 206 connects the robotic arm 204 to the mobile platform 202 and provides rotational movement around the vertical axis. This rotation allows the robotic arm 204 to reach areas all around the retrieval robot 200 without requiring the mobile platform 202 to reposition itself for every different approach angle. A shoulder joint 208 connects to the base joint 206 and provides up-and-down movement, enabling the robotic arm 204 to reach different heights from floor level up to elevated positions. An elbow joint 210 connects to the shoulder joint 208 and provides additional range of motion, allowing the robotic arm 204 to extend and retract as needed to reach parcels at different distances from the retrieval robot 200. Wrist joints 212, 214, and 216 are positioned at the end of the robotic arm 204 and provide fine control over the orientation of the end effector 218. These wrist joints 212, 214, and 216 allow for adjustments in pitch, yaw, and roll, enabling the end effector 218 to approach parcels from optimal angles for secure grasping.

In present embodiments, at least one joint of the plurality of joints 206, 208, 210, 212, 214, and 216 includes a sensor 220 (generally represented). The sensor 220 is configured to detect resistance during operation and stop movement when the resistance exceeds a threshold value. This safety feature prevents the robotic arm 204 from applying excessive force that might damage parcels or cause other operational issues. The sensors 220 provide real-time feedback to the control unit 222, enabling adaptive control of the robotic arm 204 based on the current conditions of each retrieval operation.

In the illustrated embodiment, the end effector 218 is implemented as a mechanical gripper with opposing fingers that close around a parcel to hold it securely. The mechanical gripper includes pressure sensors that regulate the gripping force applied to parcels, ensuring a secure hold without crushing or damaging the parcel contents. The mechanical gripper also includes textured contact surfaces that enhance grip on smooth parcel materials, reducing the risk of slippage during lifting and transport operations. In alternative embodiments not explicitly shown in the figures, the end effector 218 may be implemented in any other form, without any limitations, such as a vacuum pad that uses suction to lift and hold parcels. The vacuum pad would be particularly effective for parcels with flat surfaces where suction can be reliably established.

In the retrieval robot 200, the control unit 222 may be housed within the mobile platform 202 and is the central processing system of the retrieval robot 200. The control unit 222 includes processing hardware and software that coordinate all functions of the retrieval robot 200. The control unit 222 manages navigation of the mobile platform 202, operation of the robotic arm 204, communication with other system components, and safety monitoring during all operations. The control unit 222 receives location coordinates of fallen parcels from the detection module 102 and plans efficient paths to these locations while considering current conditions in the sorting area 130. The control unit 222 also manages the sequence of movements required for the robotic arm 204 to successfully retrieve fallen parcels, adjusting these movements based on feedback from sensors throughout the robotic arm 204.

In some embodiments, the control unit 222 is further configured to calculate the weight of a fallen parcel based on deformation of the robotic arm 204 during lifting operations. This calculation uses data from strain gauges or similar sensors in the robotic arm 204 that measure the mechanical strain experienced during lifting. By analyzing this strain data, the control unit 222 can estimate the weight of the parcel being lifted and adjust motor parameters of the robotic arm 204 accordingly. This adaptive control ensures that appropriate force and speed are applied for each specific parcel, optimizing the retrieval process and minimizing the risk of operational failures.

In present configuration, the retrieval robot 200 also includes a communication interface (not shown) that connects it to the communication network of the system 100. The communication interface enables the retrieval robot 200 to receive missions and instructions from the central control system 114, report its status and operations, and coordinate with other components of the system 100. The communication interface is configured to support commands related to normal operations and emergency commands that might be issued in exceptional situations.

The retrieval robot 200 is designed to balance several key requirements, including, but not limited to, mobility capability to reach fallen parcels anywhere in the sorting area, manipulation capability to securely grasp and lift parcels from the floor, computation capability to plan and execute complex retrieval operations, and safety features to prevent damage to parcels and the surrounding environment. The integration of these capabilities in a single specialized robot enables the system 100 to address the challenge of fallen parcels in automated sorting environments without requiring manual intervention, thereby maintaining operational efficiency and reducing downtime.

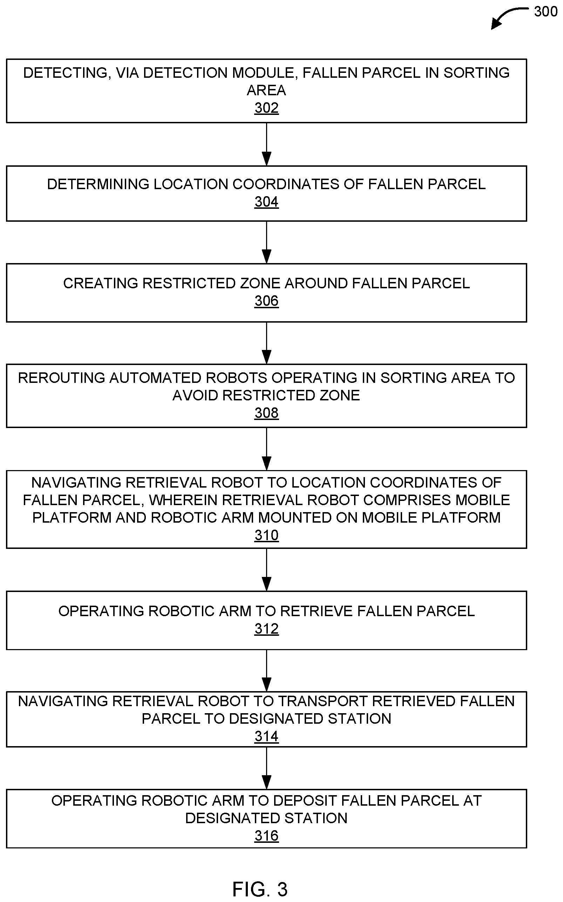

Referring to FIG. 3, illustrated is a flowchart of a method 300 for handling fallen parcels in an automated sorting environment, according to certain embodiments. The present method 300 outlines the sequential steps executed by the system 100 when a parcel falls from an automated robot in the sorting area 130. These steps are coordinated across the various components of the system 100 to ensure efficient and safe retrieval of fallen parcels without disrupting overall sorting operations.

At step 302, the method 300 includes detecting, via the detection module 102, a fallen parcel in the sorting area 130. The detection module 102 continuously monitors the sorting area 130 using the vision system 106, capturing images of the operational space and analyzing these images to identify objects that do not belong on the floor. When a parcel falls from an automated robot, the detection module 102 identifies the fallen object through computer vision algorithms that compare current images with established baseline conditions of the sorting area 130. The detection algorithms are designed to distinguish fallen parcels from other objects or features that might normally be present on the floor of the sorting area 130, such as permanent fixtures, temporary markers, or shadows. The detection module 102 analyses multiple attributes of detected objects, including size, shape, colour patterns, and position, to confirm that a detected object is a fallen parcel that requires retrieval.

At step 304, the method 300 includes determining location coordinates of the fallen parcel. This step may also be performed by the detection module 102, which calculates the precise position of the fallen parcel in a coordinate system that is understood by all components of the system 100. The coordinate determination process may utilize multiple perspectives from the cameras 108 to achieve accurate three-dimensional positioning. The detection module 102 may also employ reference markers or patterns on the floor of the sorting area 130 to calibrate and refine its coordinate calculations. The determined coordinates include not only the horizontal position (x and y coordinates) but also information about the orientation of the fallen parcel, which will be useful for the retrieval robot 200 when planning its grasping approach.

At step 306, the method 300 includes creating a restricted zone around the fallen parcel. This step is executed by the traffic management module 104, specifically by the zone restriction unit 120 therein. The restricted zone is a defined area around the fallen parcel where standard automated robots are not permitted to enter. The size and shape of the restricted zone are calculated based on the size of the fallen parcel, the space required for the retrieval robot 200 to operate, and safety margins to prevent any risk of collision or interference. The restricted zone information is communicated to all automated robots operating in the sorting area 130, updating their navigation constraints to include this new restricted area.

At step 308, the method 300 includes rerouting automated robots operating in the sorting area 130 to avoid the restricted zone. That is, the operational flow continues with rerouting automated robots that are operating in the sorting area 130 to avoid the newly created restricted zone. This step is performed by the traffic management module 104, specifically the routing control unit 122 therein. The routing control unit 122 calculates alternative paths for automated robots that would otherwise pass through the restricted zone, ensuring that they can continue their sorting operations while avoiding the area around the fallen parcel. The rerouting process considers the current positions, destinations, and priorities of all automated robots in the sorting area 130, aiming to minimize disruption to overall sorting operations while ensuring safety and enabling the retrieval process. The new routes are communicated to the affected automated robots through the communication network, allowing them to adjust their paths accordingly.

At step 310, the method 300 includes navigating the retrieval robot 200 to the location coordinates of the fallen parcel. That is, with the restricted zone established and other automated robots rerouted, the operational flow proceeds to navigate the retrieval robot to the location of the fallen parcel. This step involves the retrieval robot 200 moving from its current position to the coordinates of the fallen parcel as determined in step 304. The navigation is managed by the control unit 222 of the retrieval robot 200, which plans an efficient path to location of the fallen parcel while considering the current state of the sorting area 130, including the positions of other automated robots and any existing restricted zones. During this navigation, the retrieval robot 200 is given routing priority by the priority assignment unit 124 of the traffic management module 104. This priority ensures that other automated robots will provide a way to the retrieval robot 200 if their paths would otherwise intersect, allowing the retrieval robot 200 to reach the fallen parcel without unnecessary delays.

At step 312, the method 300 includes operating the robotic arm 204 to retrieve the fallen parcel. This step involves the control unit 222 of the retrieval robot 200 activating the robotic arm 204 to pick up the fallen parcel from the floor. The control unit 222 plans the sequence of joint movements necessary for the robotic arm 204 to reach the parcel in its current position and orientation. The robotic arm 204 extends toward the fallen parcel, positions its end effector 218 appropriately, and secures the parcel either through mechanical gripping or vacuum suction, depending on the type of end effector 218 installed. During this operation, the sensor(s) 220 in the robotic arm 204 provide feedback to the control unit 222, allowing for adaptive control of the gripping force and movement speed to ensure secure handling without damaging the parcel.

At step 314, the method 300 includes navigating the retrieval robot 200 to transport the retrieved fallen parcel to the designated station 110. This step involves the retrieval robot 200 carrying the retrieved parcel from its pickup location to the designated station 110. The control unit 222 of the retrieval robot 200 plans a path to the designated station 110 while continuing to hold the retrieved parcel securely with the robotic arm 204. During this transport phase, the retrieval robot 200 maintains its routing priority, ensuring clear passage to the designated station 110. The control unit 222 monitors the stability of the held parcel throughout the transport, adjusting grip strength or movement parameters if necessary to prevent dropping the parcel again during transport.

At step 316, the method 300 includes operating the robotic arm 204 to deposit the fallen parcel at the designated station 110. That is, upon arriving at the designated station 110, the operational flow advances to operating the robotic arm 204 of the retrieval robot 200 to deposit the parcel at the designated station 110. This step involves the control unit 222 directing the robotic arm 204 to place the retrieved parcel in a specific location within the designated station 110. The deposit station 110 is designed to facilitate subsequent inspection and processing of the fallen parcel. The robotic arm 204 executes a controlled release of the parcel, ensuring that it is placed securely and will not fall or roll from its deposit position. The deposit operation is coordinated to align with the processing capabilities of the designated station 110, setting up the parcel for inspection and potential reinduction into the sorting process.

It may be noted that the operational flow of the method 300 concludes with normal operations resuming in the area where the fallen parcel was located. This step involves the traffic management module 104 removing the restricted zone that was established around the fallen parcel location. The routing control unit 122 updates the navigation constraints for all automated robots, allowing them to resume using the previously restricted area for their sorting operations. This normalization of operations completes the fallen parcel handling process, returning the sorting area 130 to its full operational capacity.

In the method 300, detecting the fallen parcel comprises processing image data from one or more cameras 108 positioned above the sorting area 130 to identify parcel(s) on the floor of the sorting area 130. As discussed, the detection module 102 utilizes the one or more cameras 108, as part of the vision system 106, strategically positioned at various points on the ceiling of the sorting area 130. These cameras 108 continuously capture images of the entire sorting area 130 from different angles, providing comprehensive visual coverage without blind spots. The image processing unit 116 receives the image data streams from all the cameras 108 simultaneously and processes these multiple perspectives to create a complete understanding of the sorting area 130. When analyzing the images, the parcel identification logic 118 applies computer vision algorithms that identify objects on the floor by comparing their visual characteristics against expected patterns for parcels. Thereby, the detection module 102 can accurately distinguish fallen parcels from shadows, reflections, or other visual artifacts that might appear in single-camera views, reducing false detections while ensuring reliable identification of actual fallen parcels.

Further, in the method 300, navigating the retrieval robot 200 to the location coordinates comprises assigning routing priority to the retrieval robot 200; and transmitting stop or divert commands to other automated robots that are in a path of the retrieval robot 200. Herein, when the retrieval robot 200 begins navigation toward a fallen parcel, the priority assignment unit 124 of the traffic management module 104 designates the retrieval robot 200 as a high-priority vehicle within the routing system. This priority designation ensures that the retrieval robot 200 can move efficiently to the fallen parcel location without being delayed by regular traffic patterns of standard automated robots 112. As the retrieval robot 200 follows the navigation path calculated by the control unit 222, the routing control unit 122 identifies any standard automated robots 112 that are currently in or projected to enter the path of the retrieval robot 200. For each such potential traffic conflict, the routing control unit 122 transmits specific commands to the affected standard automated robots 112. These commands may instruct the standard automated robots 112 to temporarily stop movement and hold position until the retrieval robot 200 has passed, or to divert to alternative paths that avoid intersection with the retrieval robot 200. The traffic management module 104, by actively managing the movement of all vehicles in the sorting area 130, creates clear corridors for the retrieval robot 200 to reach fallen parcels quickly and efficiently.

The method 300 further comprises scanning the deposited fallen parcel at the designated station 110 for inspection to detect physical damage; and return the fallen parcel from the designated station 110 to the automated sorting environment after inspection, based on results of the scanning. Once the robotic arm 204 deposits the fallen parcel at the designated station 110, the scanning device 126 activates to capture detailed images of the parcel from multiple angles. The scanning device 126 examines the external condition of the parcel, looking for signs of physical damage such as tears, crushes, open seams, or deformation that might have occurred during the fall or retrieval process. The images captured by the scanning device 126 may be analyzed automatically by image processing algorithms, manually by human operators through a remote interface, or through a combination of both approaches. Based on the results of this inspection, a decision is made regarding the disposition of the fallen parcel. If the scanning determines that the parcel is undamaged and suitable for continued processing, the conveyor system 128 activates to transport the parcel back to an appropriate entry point in the main sorting process. If damage is detected, the parcel may be routed to a special handling area for manual inspection, repackaging, or other remedial actions as appropriate.

Throughout the method 300, the various steps are executed in a coordinated manner across multiple system components, with real-time communication and adaptive control ensuring efficient and successful fallen parcel retrieval. The entire operational flow for the method 300 is designed to minimize disruption to overall sorting operations while effectively addressing the fallen parcel issue, thereby maintaining high throughput and operational efficiency in the automated sorting environment.

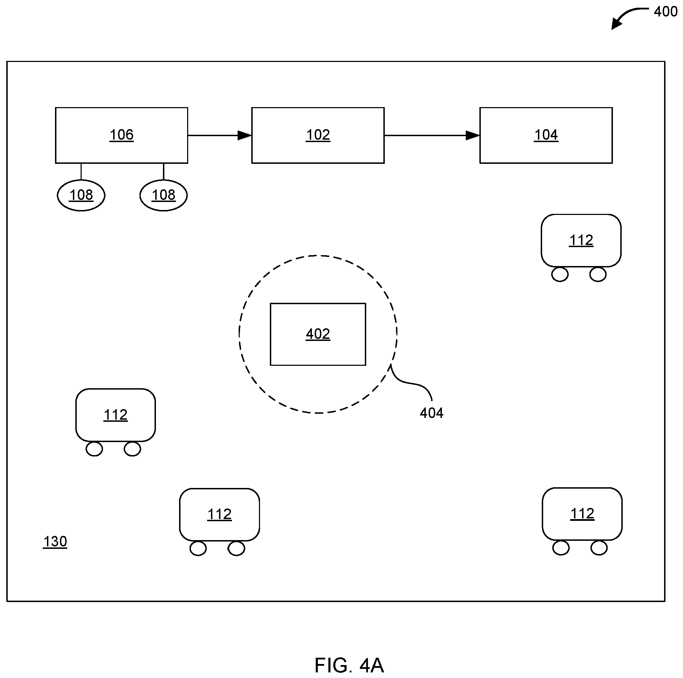

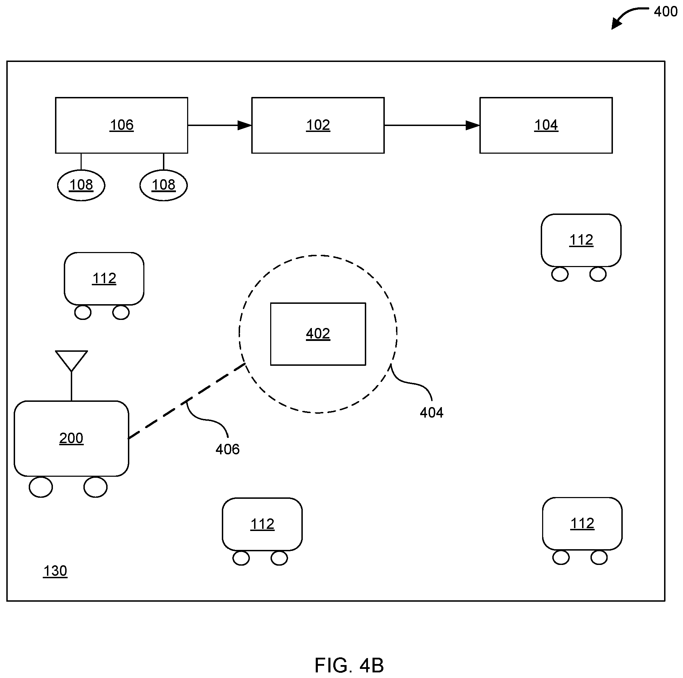

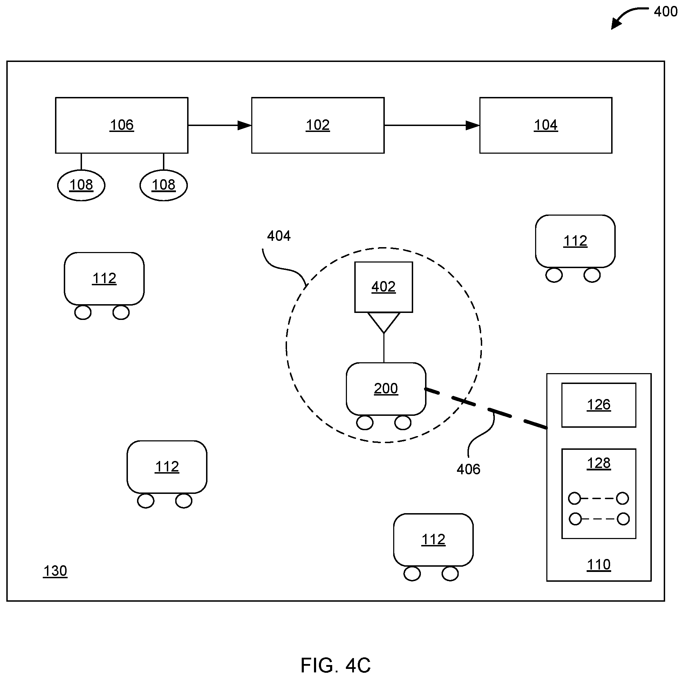

Referring to FIGS. 4A, 4B, and 4C, illustrated are schematic top views of an automated sorting environment 400, showing different stages of the fallen parcel handling process, according to certain embodiments. These figures provide a visual representation of how the system 100, the retrieval robot 200, and the method 300 are implemented within the automated sorting environment 400, highlighting the spatial relationships and movements involved in the retrieval process of the fallen parcel.

FIG. 4A depicts an implementation stage involving detection of a fallen parcel and the creation of a restricted zone around it. The automated sorting environment 400 represents the physical space of the sorting area 130, with standard automated robots 112 moving along predefined paths transporting parcels. A fallen parcel (as represented by reference numeral 402) is shown on the floor of the automated sorting environment 400, having accidentally fallen from one of the standard automated robots 112 during transport. Herein, the vision system 106 monitors the automated sorting environment 400 through one or more cameras 108 positioned above the sorting area 130. The detection module 102 processes image data from the cameras 108 to identify the fallen parcel 402 on the floor. Upon detection, the traffic management module 104 creates a restricted zone 404 around the fallen parcel 402, shown as a highlighted dashed area that standard automated robots 112 would need to avoid.

FIG. 4B depicts an implementation stage involving navigation of the retrieval robot 200 to the fallen parcel 402 and the retrieval operation. The retrieval robot 200 follows a navigation path 406 that leads from its previous position to the location of the fallen parcel 402. The traffic management module 104 assigns routing priority to the retrieval robot 200 and transmits stop or divert commands to other standard automated robots 112 that are in the path of the retrieval robot 200. This priority routing ensures that the retrieval robot 200 can move efficiently to the fallen parcel location without being delayed by regular traffic patterns. As the retrieval robot 200 moves along the navigation path 406, other standard automated robots 112 maintain their distance from the restricted zone 404, in order to ensure clear passage to the retrieval robot 200. Upon reaching the fallen parcel 402, the retrieval robot 200 positions itself appropriately and the control unit 222 operates the robotic arm 204 to retrieve the fallen parcel 402 from the floor.

FIG. 4C depicts an implementation stage involving transport of the retrieved fallen parcel 402 to the designated station 110 for subsequent inspection processes. After the robotic arm 204 retrieves the fallen parcel 402, the control unit 222 navigates the mobile platform 202 to transport the retrieved fallen parcel 402 to the designated station 110. The retrieval robot 200 follows another navigation path 406 leading to the designated station 110, carrying the retrieved parcel 402 with its robotic arm 204. At the designated station 110, the control unit 222 operates the robotic arm 204 to deposit the fallen parcel 402. The scanning device 126 then scans the deposited fallen parcel 402 for inspection to detect physical damage. Based on the results of this scanning, the conveyor system 128 returns the fallen parcel 402 from the designated station 110 to the automated sorting environment 400 after inspection, if the parcel is determined to be undamaged and suitable for continued processing.

Throughout this sequence, the central control system 114 coordinates all system components while maintaining communication with the retrieval robot 200 and all standard automated robots 112 operating in the automated sorting environment 400. The central control system 114 ensures that the fallen parcel retrieval process proceeds efficiently and safely, with minimal disruption to overall sorting operations. After the retrieval robot 200 completes this process, the traffic management module 104 removes the restricted zone 404, allowing standard automated robots 112 to resume normal operations throughout the entire sorting environment 400.

These visual representations in FIGS. 4A, 4B, and 4C demonstrate how the system 100 manages the spatial and temporal aspects of fallen parcel handling, integrating retrieval operations with ongoing sorting activities to maintain efficient overall operation of the automated sorting environment 400.

In the foregoing description, specific embodiments of the present disclosure have been described by way of examples with reference to the accompanying figures and drawings. One of ordinary skill in the art will appreciate that various modifications and changes can be made to the embodiments without departing from the scope of the present disclosure as set forth in the claims below. Accordingly, the specification and figures are to be regarded in an illustrative rather than a restrictive sense, and all such modifications are intended to be included within the scope of the present disclosure. The benefits, advantages, solutions to problems, and any element(s) that may cause any benefit, advantage, or solution to occur or become more pronounced are not to be construed as a critical, required, or essential features or elements of any or all of the claims. The present disclosure is defined solely by the appended claims including any amendments made during the pendency of this application and all equivalents of those claims as issued.

## Claims

1. A system for handling fallen parcels in an automated sorting environment, comprising:
a detection module configured to detect a fallen parcel and determine location coordinates of the fallen parcel in a sorting area;
a traffic management module configured to:
create a restricted zone around the fallen parcel, and
reroute automated robots operating in the sorting area to avoid the restricted zone; and
a retrieval robot comprising:
a mobile platform,
a robotic arm mounted on the mobile platform, and
a control unit configured to:
navigate the mobile platform to the location coordinates of the fallen parcel,
operate the robotic arm to retrieve the fallen parcel,
navigate the mobile platform to transport the retrieved fallen parcel to a designated station, and
operate the robotic arm to deposit the fallen parcel at the designated station.

2. The system as claimed in claim 1, wherein the detection module comprises a vision system mounted above and/or around the sorting area and including one or more cameras configured to capture images of the sorting area, wherein the vision system is configured to identify and locate the parcel(s) on the floor of the sorting area.

3. The system as claimed in claim 1, wherein the traffic management module is further configured to assign routing priority to the retrieval robot and transmit stop or divert commands to other automated robots that are in a path of the retrieval robot.

4. The system as claimed in claim 1, wherein the robotic arm comprises an end effector configured to hold parcels.

5. The system as claimed in claim 1, wherein the control unit is further configured to:
calculate weight of the fallen parcel based on deformation of the robotic arm during lifting thereof, and
adjust motor parameters of the robotic arm based on the calculated weight.

6. The system as claimed in claim 1, wherein the designated station includes a scanning device configured to capture images of the deposited fallen parcel for inspection, to detect physical damage to the parcel.

7. The system as claimed in claim 6, wherein the designated station further includes a transportation device configured to return the fallen parcel to the automated sorting environment after inspection, based on results of the scanning.

8. A retrieval robot for handling fallen parcels in an automated sorting environment, comprising:
a mobile platform configured to navigate within a sorting area;
a robotic arm mounted on the mobile platform; and
a control unit configured to:
receive location coordinates of a fallen parcel detected in the sorting area,
navigate the mobile platform to the location coordinates of the fallen parcel,
operate the robotic arm to retrieve the fallen parcel,
navigate the mobile platform to a designated station, and
operate the robotic arm to deposit the fallen parcel at the designated station.

9. The retrieval robot as claimed in claim 8, wherein the robotic arm comprises an end effector configured to hold parcels.

10. The retrieval robot as claimed in claim 8, wherein the control unit is further configured to:
calculate weight of the fallen parcel based on deformation of the robotic arm during lifting thereof, and
adjust motor parameters of the robotic arm based on the calculated weight.

11. A method for handling fallen parcels in an automated sorting environment, comprising:
detecting, via a detection module, a fallen parcel in a sorting area;
determining location coordinates of the fallen parcel;
creating a restricted zone around the fallen parcel;
rerouting automated robots operating in the sorting area to avoid the restricted zone;
navigating a retrieval robot to the location coordinates of the fallen parcel, wherein the retrieval robot comprises a mobile platform and a robotic arm mounted on the mobile platform;
operating the robotic arm to retrieve the fallen parcel;
navigating the retrieval robot to transport the retrieved fallen parcel to a designated station; and
operating the robotic arm to deposit the fallen parcel at the designated station.

12. The method as claimed in claim 11, wherein detecting the fallen parcel comprises processing image data from one or more cameras positioned above and/or around the sorting area to identify and locate the parcel(s) on the floor of the sorting area.

13. The method as claimed in claim 11, wherein navigating the retrieval robot to the location coordinates comprises:
assigning routing priority to the retrieval robot; and
transmitting stop or divert commands to other automated robots that are in a path of the retrieval robot.

14. The method as claimed in claim 11, further comprising:
scanning the deposited fallen parcel at the designated station for inspection to detect physical damage; and
return the fallen parcel from the designated station to the automated sorting environment after inspection, based on results of the scanning.
